# EUROPÄISCHE PATENTSCHRIFT

(11) **EP 0 647 538 B1**
(45) Veröffentlichungstag und Bekanntmachung des Hinweises auf die Patenterteilung: **28.05.1997**
(21) Anmeldenummer: 94115496.5
(22) Anmeldetag: 30.09.1994
(51) Int. Cl.: B60J 7/22

(54) **Vorrichtung zur Beeinflussung der Luftströmung im Bereich eines öffnungsfähigen Fahrzeugdaches**
Device for modifying of the air flow in the environment of an openable vehicle roof
Dispositif pour modifier le flux d'air dans la région d'un toit ouvrant d'un véhicule

(30) Priorität: 06.10.1993 DE 4334011
(43) Veröffentlichungstag der Anmeldung: 12.04.1995
(73) Patentinhaber: WEBASTO KAROSSERIESYSTEME GmbH, D-82131 Stockdorf (DE)
(72) Erfinder: Watzlawick, Robert, D-81477 München (DE)
(74) Vertreter: Wiese, Gerhard

(56) Entgegenhaltungen:
- DE-A- 4 033 027
- DE-A- 4 034 851
- PATENT ABSTRACTS OF JAPAN vol. 9, no. 220 (E-341) (1943) 6. September 1985 & JP-A-60 078 826 (TOYOTA JIDOSHA K. K.) 5. April 1985

## Beschreibung

Die Erfindung betrifft eine Vorrichtung zur Beeinflussung der Luftströmung im Bereich der Dachöffnung eines öffnungsfähigen Fahrzeugdaches.

Bei einem Schiebedach oder Schiebehebedach stellt sich bei einer bestimmten Fahrgeschwindigkeit bei teilweise und insbesondere bei vollständig unter die feste Dachhaut geschobenen Deckel im Fahrzeuginnenraum ein niederfrequentes Geräusch ein, für das in der Fachwelt der Begriff "Wummern" geprägt wurde. Es gab zahlreiche Versuche, dieses Wummern durch Windabweiser zu beseitigen, die entweder mit dem Öffnen des Deckels nach oben ausstellen, oder die fest am Fahrzeugdach angeordnet sind. An derartigen Windabweisern wurden bereits verschiedentlich Versuche unternommen, durch abwechselnd vorspringende und demgegenüber zurückweichende Oberkanten eine Störung des an der Dachöffnung vorbeistreichenden Luftstromes beziehungsweise dessen Zerlegung in unterschiedlich abgelenkte Teilströme zu erreichen. Derartige Ausbildungen eines schwenkbaren Windabweisers sind beispielsweise aus der EP-A2-0 374 421 oder der DE-A1-41 26 568 bekannt. Bei der DE-A1-40 33 027 sind in einer Ausgestaltungsform ein oder mehrere keilförmige Störkörper vorgesehen, die im Bereich der Vorderkante der Dachöffnung fest angeordnet sind. Abgesehen von einem ungewohnten optischen Erscheinungsbild eines solchen Fahrzeugdaches ist die Wirkung all dieser bekannten Windabweiserelemente bei bestimmten Fahrgeschwindigkeiten unzureichend.

Der Erfindung liegt die Aufgabe zugrunde, eine Vorrichtung zur Beeinflussung der Luftströmung im Bereich der Dachöffnung eines öffnungsfähigen Fahrzeugdaches zu schaffen, mittels der auf einfache und zuverlässige Art ein Wummern bei allen Fahrgeschwindigkeiten wirksam vermieden wird.

Diese Aufgabe wird durch die kennzeichnenden Merkmale des Patentanspruchs 1 gelöst. Gemaß der vorliegenden Erfindung wird die Vorrichtung zur Beeinflussung der Luftströmung von einer Leiste gebildet, die parallel zur Vorderkante der Dachöffnung mittig vor dieser so angeordnet ist, daß ihr Abstand etwa 30 mm bis 150 mm zur Dachöffnung beträgt, wobei die Länge der Leiste in Bezug auf die Breite der Dachöffnung etwa 20% bis 50% derselben beträgt.

Vorteilhafterweise weist die Leiste eine nach hinten ansteigende Frontfläche auf, sodaß ihre Kontur strömungsgünstiger wird.

In einer vorteilhaften Weiterbildung ist vorgesehen, daß die Oberkante der Leiste in ihrer Höhe bezüglich der festen Dachhaut veränderbar ist. Gemäß einer weiteren vorteilhaften Ausgestaltung ist vorgesehen, daß die Leiste in einen Aufnahmeraum in der festen Dachhaut absenkbar ist. In abgesenktem Zustand der Leiste bietet das Fahrzeugdach bei geschlossenem Deckel beziehungsweise bei bestimmten Fahrgeschwindigkeiten somit ein glattflächiges Erscheinungsbild. Die Voraussetzung für eine Bewegung der Leiste zur Veränderung ihrer Höhenlage erfolgt vorteilhafterweise durch eine schwenkbare Lagerung ihrer Vorderkante an der festen Dachhaut. Hierdurch wird neber einer einfachen Betätigung erreicht, daß sich der Winkel, den die Frontfläche der Leiste mit der dahinterliegenden festen Dachhaut bildet, beim Ausstellen kontinuierlich vergrößert.

Zur Höhenverstellung der Leiste ist vorteilhafterweise ein an ihrer Unterseite angreifender Antrieb vorgesehen. Durch diese Anordnung an der Unterseite liegt der Antrieb gleichzeitig geschützt vor Beschädigungen und zusätzlich in einem von außen nicht sichtbaren Bereich.

Vorteilhaft ist es, wenn der Antrieb in Abhängigkeit von der Fahrgeschwindigkeit betätigbar ist. Durch eine derartige Abhängigkeit läßt sich sicherstellen, daß die Leiste nur dann ausgefahren wird, wenn sich das Fahrzeug in einem Geschwindigkeitsbereich bewegt, in dem typischerweise das Wummern auftritt, während sie in den übrigen Geschwindig-keitsbereichen in ihre eingezogene Position verfahren wird und insofern das glattflächige Aussehen des Fahrzeugdaches nicht beeinträchtigt wird. Besonders vorteilhaft ist eine Anordnung, gemäß der der Antrieb die Leiste bei Erreichen einer ersten Fahrgeschwindigkeit V₁ die Leiste ausführt und bei Erreichen einer zweiten, höheren Fahrgeschwindigkeit V₂ die Leiste absenkt. Eine solche Ausgestaltung berücksichtigt die Tatsache, daß das Wummern typischerweise bei einer bestimmten Geschwindigkeit beginnt und bei einer etwas höher liegenden Geschwindigkeit wieder verschwindet. Ein feststehender Windabweiser hat bei höheren Fahrgeschwindigkeiten den Nachteil, daß er zu einer deutlichen Erhöhung der Windgeräusche beiträgt. Insofern ist der unabhängig von der Deckelstellung in Abhängigkeit von der Fahrgeschwindigkeit verstellbare Leisten-körper gemäß der Erfindung einem herkömmlichen, im Bereich der Schiebedachöffnung angeordneten Windabweiser weit überlegen, der nur bei vollkommen geschlossenem Deckel durch die Mechanik des Deckels in seine eingezogene Position bewegt wird.

Insbesondere bei einer geschwindigkeitsabhängigen Höhenverstellung der Leiste ist es vorteilhaft, wenn die Positionsveränderung der Leiste zusätzlich in Abhängigkeit von der Stellung des Deckels erfolgt. Durch eine derartige Abhängigkeit wird gewährleistet, daß die Leiste nur dann ausgefahren wird, wenn der Deckel zumindestens teilweise in eine geöffnete Position verfahren wurde. Bei geschlossenem Deckel hingegen kann die Leiste in ihrer abgesenkten Position verbleiben.

Gemäß einer weiteren vorteilhaften Ausgestaltung ist - wie aus der DE-A1 40 33 027 prinzipiell bekannt - vorgesehen, daß die Leiste als Träger einer Dachantenne dient. Bei einer höhenverstellbaren Leiste kann dann der Verstellmotor vorteilhaft zum Ein-und Ausfahren der Antenne mit verwendet werden.

Nachfolgend ist ein Ausführungsbeispiel der Erfindung anhand der Zeichnung beschrieben. Es zeigt:
- Fig. 1: einen schematischen Längsschnitt durch ein Fahrzeugdach,
- Fig. 2: eine schematische Draufsicht auf ein Fahrzeugdach und
- Fig. 3: eine vergrößerte Darstellung des in Fig. 1 mit III bezeichneten Bereiches, mit den für eine Verstellung der Leiste erforderlichen Steuerungsmitteln.

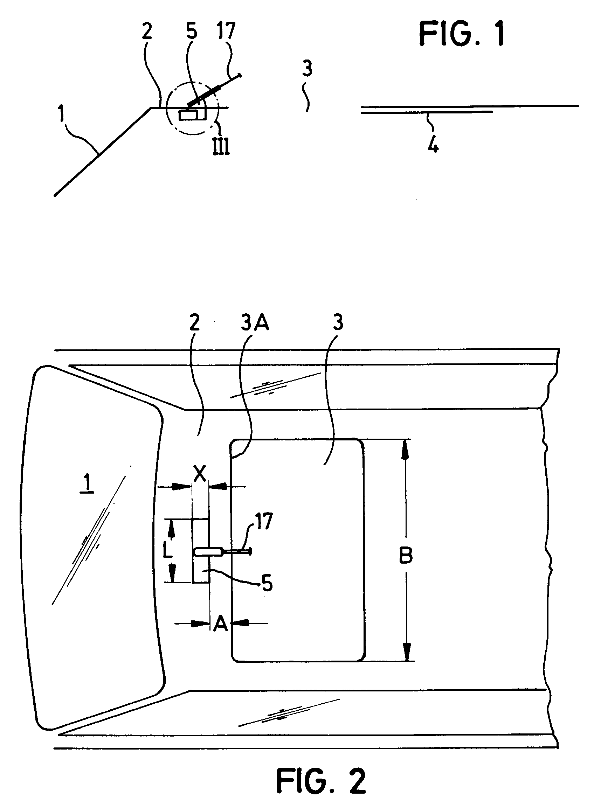

In Fig. 1 schließt sich an eine Frontscheibe 1 nach oben ein festes Fahrzeugdach 2 an. In diesem ist eine Dachöffnung 3 vorgesehen, die mittels eines verschiebbaren oder ausstell-baren und verschiebbaren Deckels 4 wahlweise wenigstens teilweise freigebbar beziehungsweise verschließbar ist. Die Betätigung des Deckels 4 erfolgt in bekannter Weise über einen elektrischen Antrieb und von diesem angetriebene Antriebskabel, welche auf in seitlich der Dachöffnung 3 angeordnete Führungsschienen verschiebbar gelagerte Gleitstücke einwirken. Diese Mittel zum Betätigen des Deckels 4 sind nicht näher dargestellt. Zwischen der oberen Kante der Frontscheibe 1 und der Vorderkante 3A (Fig. 2) der Dachöffnung 3 ist an der festen Dachhaut 2 eine Leiste 5 befestigt. Diese Leiste 5 hat eine Länge L, die in etwa 20% bis 50% der Breite B der Dachöffnung 3 entspricht (Fig. 2). Die Leiste 5 ist parallel zur Vorderkante 3A der Dachöffnung 3 mittig vor dieser angeordnet, sodaß zwischen Hinterkante der Leiste 5 und Vorderkante 3A der Dachöffnung 3 ein Abstand A gebildet wird, der etwa 30 mm bis 150 mm beträgt. Die Leiste 5 weist in Fahrzeuglängsrichtung gesehen eine Breite X auf, die etwa 45 mm beträgt.

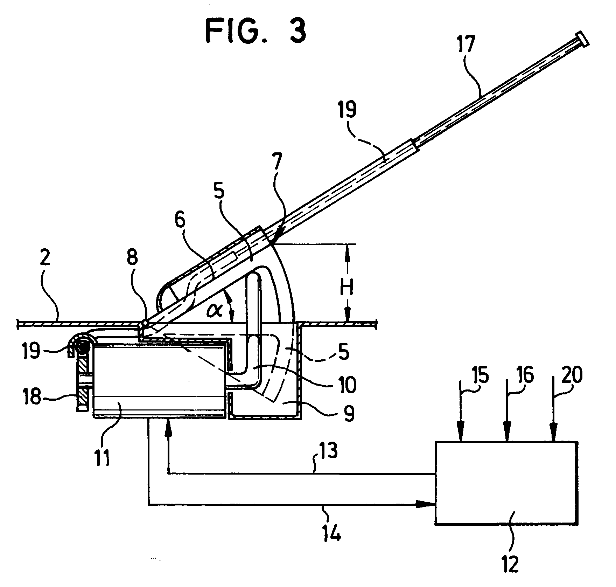

Wie in Fig. 3 zu ersehen, weist die Leiste 5 eine in Fahrtrichtung nach hinten ansteigende Frontfläche 6 auf. Mit ihrer Oberkante 7 bildet die Leiste 5 zur festen Dachhaut 2 eine Höhe H, welche etwa 20 mm beträgt. Dadurch, daß die Leiste 5 nahe ihrer Vorderkante in einer Schwenkachse 8 an der festen Dachhaut 2 schwenkbar gelagert ist, ist die Höhe H zwischen 0 mm und 20 mm variabel. Im eingeschwenkten Zustand befindet sich die Leiste 5 vollkommen in einem Aufnahmeraum 9, der in der festen Dachhaut 2 vorgesehen ist. In diesem Zustand liegt die Frontfläche 6 in etwa horizontal und schließt bündig mit der festen Dachhaut 2 ab. Die Betätigung der Leiste 5 zur Einstellung der Höhe H erfolgt über einen Exzenter 10, der auf die Unterseite der Leiste 5 mit seinem einem Ende einwirkt. Das andere Ende des Exzenters 10 ist an einem Motor 11 drehbar befestigt. Durch ein Verdrehen des Exzenters 10 mittels des Motors 11 wird die Leiste 5 entweder in ihre ausgestellte Position oder in die in Fig. 3 gestrichelt dargestellte Position bewegt, bei der sie vollkommen vom Aufnahmeraum 9 aufgenommen wird.

In einer bevorzugten Variante dient die Leiste 5 gleichzeitig als Träger für eine Dachantenne 17. Diese kann in an sich bekannter Weise manuell oder motorisch teleskopartig ein- und ausfahrbar sein. Bei einer motorisch ausfahrbaren Dachantenne 17 wird der Motor 11 vorzugsweise in einem zweiten Betriebsmodus außer zur Höhenverstellung der Leiste 5 auch zum Ein- bzw. Ausfahren der Dachantenne 17 verwendet. Hierzu treibt der Motor 11 nach Anliegen eines entsprechenden Eingangssignals am Signaleingang 20 der Steuerung 12 im Antennenverstellmodus ein durch eine nicht dargestellte Magnetkupplung ankuppelbares Ritzel 18 an, mit dem ein Spiralkabel 19 in Verzahnungseingriff steht, das nach Art eines Bowdenzuges, jedoch zusätzlich druckfest im Inneren der Leiste 5 und der Dachantenne 17 geführt ist. Beim Ankuppeln des Ritzels 18 wird der Antrieb des Exzenters 10 bei Bedarf vom Motor 11 abgekuppelt. Bei abgestelltem Fahrzeug oder beispielsweise beim Befahren einer Waschanlage ist bei geschlossenem Deckel 4 die Leiste 5 in den Aufnahmeraum 9 abgesenkt, wobei sich gleichzeitig die Dachantenne 17 in eingefahrenem Zustand befindet und dadurch optimal vor Beschädigungen geschützt ist.

Der Motor 11 ist mit einer Steuerung 12 über zwei Leitungen 13 bzw. 14 verbunden. Die Leitung 13 dient für eine Übermittlung von Stellimpulssignalen vom Steuergerät an den Motor 11. Die Leitung 14 dient zur Übermittlung einer Positionsrückmeldung der Lage der Leiste 5 an das Steuergerät 12. Die Steuerung 12 weist weiterhin zwei Eingänge 15 bzw. 16 auf, von denen der Eingang 15 eine Tachosignalleitung darstellt, über welche ein für die Geschwindigkeit des Fahrzeuges repräsentatives Signal eingespeist wird, während die Leitung 16 zur Übermittlung eines Positionssignales des Deckels 4 verwendet wird.

Die Funktion der dargestellten Vorrichtung wird nachfolgend beschrieben. Die Leiste 5 befindet sich in Grundstellung bei abgestelltem Fahrzeug oder bei niedriger Fahrgeschwindigkeit in der eingezogenen, in Fig. 3 gestrichelt dargestellten Position. Wird der Deckel 4 in eine bestimmte Öffnungsposition gefahren, so wird dies dem Steuergerät 12 über die Signalleitung 16 signalisiert. Die Steuerung 12 prüft daraufhin, wie hoch die momentane Fahrgeschwindigkeit des Fahrzeuges ist. Das dazu erforderliche Signal wird über die Leitung 15 eingespeist. Wird bei zumindestens teilweise geöffnetem Deckel 4 eine erste vorbestimmte, empirisch zu ermittelnde und im Steuergerät 12 als Referenzwert gespeicherte Fahrgeschwindigkeit V₁ überschritten, so gibt die Steuerung über die Leitung 13 einen Stellimpuls an den Motor 11, der daraufhin den Exzenter 10 in eine Drehbewegung versetzt, wodurch sich wiederum die Leiste 5 aus ihrer abgesenkten in eine ausgestellte Position bewegt. Dieses Ausstellen kann stufenweise oder stufenlos in Abhängigkeit vom über die Leitung 15 eingehenden Geschwindigkeitssignal erfolgen, sodaß sich der Winkel α, den die Frontfläche 6 der Leiste 5 mit der dahinterliegenden festen Dachhaut 2 bildet, kontinuierlich bei steigender Fahrtgeschwindigkeit vergrößert. In einer vereinfachten Version erfolgt das Ausstellen der Leiste 5 auf die volle Höhe H einmalig in einem Zuge bei Feststellen einer ersten für ein Wummern kritischen Fahrgeschwindigkeit V₁. Wird bei immer noch geöffnetem Deckel 4 über die Signalleitung 15 eine Fahrgeschwindigkeit angezeigt, die einen vorbestimmten Wert V₂ überschreitet, der empirisch ermittelt und abgespeichert wurde und der ein Ende des für ein Wummern kritischen Bereiches anzeigt, so wird über die Leitung 13 ein Stellimpuls an den Motor 11 für ein Einziehen der Leiste 5 in den Aufnahmeraum 9 abgegeben. Die Position der Leiste 5 wird über die Leitung 14 ständig als Rückmeldung an das Steuergerät 12 zurückgegeben, sodaß das Steuergerät in der Lage ist zu entscheiden, ob weitere Stellimpulse erforderlich sind, oder ob die Stellbetätigung beendet werden kann.

In der eingezogenen Position der Leiste 5 liegt dieselbe mit ihrer Frontfläche 6 vollkommen bündig zur sie umgebenden festen Dachhaut 2, sodaß weder durch den Antrieb oder den Exzenter noch durch die Leiste selbst der optische Eindruck des glattflächigen Daches gestört wird. Dies ist auch bei geöffnetem Deckel 4 bei höheren Fahrgeschwindigkeiten vorteilhaft, da - nachdem der für ein Wummern kritische Bereich durchfahren wurde - ein ausgestellter Windabweiser lediglich zur Erhöhung der Windgeräusche beitragen wurde.

In einer einfachen Version wird eine Leiste 5 von den Abmessungen L, bzw. X und H in einem Abstand A fest auf der festen Dachhaut angeordnet. Dies kann beispielsweise durch Kleben oder Schrauben geschehen. Aufgrund der in Bezug zur Breite der Dachöffnung angegebenen Länge L und des Abstandes A in Bezug zur Dachöffnung wird auch bei einer solchen einfachen Ausführungsform vorteilhaft ein Wummern in allen Geschwindigkeitsbereichen vermieden.

### Bezugszeichen

- 1: Frontscheibe
- 2: feste Dachhaut
- 3: Dachöffnung
- 3A: Vorderkante von 3
- 4: Deckel
- 5: Leiste
- 6: Frontfläche
- 7: Oberkante
- 8: Schwenkachse
- 9: Aufnahmeraum
- 10: Exzenter
- 11: Motor
- 12: Steuerung
- 13: Leitung für Stellsignal
- 14: Leitung für Positionsrückmeldung
- 15: Tachosignalleitung
- 16: Leitung für Positionssignal des Deckels
- 17: Dachantenne
- 18: Ritzel
- 19: Spiralkabel
- 20: Signaleingang von Antennenschalter
- L: Länge der Leiste
- H: Höhe der Leiste
- B: Breite der Dachöffnung
- A: Abstand der Leiste von 3A
- X: Breite von 5

## Patentansprüche

1. Vorrichtung zur Beeinflussung der Luftströmung im Bereich der Dachöffnung (3) eines öffnungsfähigen Fahrzeugdaches mit einem die Dachöffnung (3) in der festen Dachhaut (2) wahlweise freigebenden und verschließenden Deckel (4), **dadurch gekennzeichnet**, daß die Vorrichtung von einer parallel zur Vorderkante (3A) der Dachöffnung (3) mittig vor dieser angeordneten Leiste (5) gebildet wird, deren Länge (L) etwa 20% bis 50% der Breite (B) der Dachöffnung (3) beträgt und deren Abstand (A) etwa 30 mm bis 150 mm zur Dachöffnung (3) beträgt.

2. Vorrichtung nach Anspruch 1, **dadurch gekennzeichnet**, daß die Leiste (5) eine nach hinten ansteigende Frontfläche (6) aufweist.

3. Vorrichtung nach einem der vorhergehenden Ansprüche, **dadurch gekennzeichnet**, daß die Oberkante (7) der Leiste (5) in ihrer Höhe (H) bezüglich der festen Dachhaut (2) veränderbar ist.

4. Vorrichtung nach Anspruch 3, **dadurch gekennzeichnet**, daß die Leiste (5) in einen Aufnahmeraum (9) in der festen Dachhaut (2) absenkbar ist.

5. Vorrichtung nach einem der Ansprüche 3 oder 4, **dadurch gekennzeichnet**, daß die Vorderkante der Leiste (5) schwenkbar an der festen Dachhaut (2) gelagert ist.

6. Vorrichtung nach einem der Ansprüche 3 bis 5, **dadurch gekennzeichnet**, daß zur Höhenverstellung der Leiste (5) ein an deren Unterseite angreifender Antrieb (Exzenter 10, Motor 11) vorgesehen ist.

7. Vorrichtung nach Anspruch 6, **dadurch gekennzeichnet**, daß der Antrieb (Motor 11) in Abhängigkeit von der Fahrgeschwindigkeit betätigbar ist.

8. Vorrichtung nach Anspruch 7, **dadurch gekennzeichnet**, daß der Antrieb (Motor 11) bei Erreichen einer ersten Fahrgeschwindigkeit V₁ die Leiste (5) ausfährt und bei Erreichen einer zweiten höheren Fahrgeschwindigkeit V₂ die Leiste (5) absenkt.

9. Vorrichtung nach einem der Ansprüche 3 bis 8, **dadurch gekennzeichnet**, daß die Höhenverstellung der Leiste (5) in Abhängigkeit von der Stellung des Deckels (4) erfolgt.

10. Vorrichtung nach einem der vorhergehenden Ansprüche, **dadurch gekennzeichnet**, daß die Leiste (5) als Träger für eine Dachantenne (17) dient.

11. Vorrichtung nach einem der Ansprüche 6 bis 10, **dadurch gekennzeichnet**, daß der Antrieb (Motor 11) zur Höhenverstellung der Leiste (5) gleichzeitig zum Ein- und Ausfahren der Dachantenne (17) verwendet wird.

## Claims

1. A device for influencing the flow of air in the region of the roof opening (3) of an openable vehicle roof with a cover (4) which as desired opens and closes the roof opening (3) in the fixed roof skin (2), characterised in that the device is constituted by a strip (5) disposed centrally in front of and parallel with the front edge (3A) of the roof opening (3) and of which the length (L) amounts to approximately 20% to 50% of the width (B) of the roof opening (3) and of which the distance (A) amounts to approximately 30 mm to 150 mm from the roof opening (3).

2. A device according to Claim 1, characterised in that the strip (5) has a rearwardly rising front surface (6).

3. A device according to one of the preceding Claims, characterised in that the top edge (7) of the strip (5) is variable in its height (H) in respect of the fixed roof skin (2).

4. A device according to Claim 3, characterised in that the strip (5) can be lowered into a receiving space (9) in the fixed roof skin (2).

5. A device according to one of Claims 3 or 4, characterised in that the front edge of the strip (5) is pivotably mounted on the fixed roof skin (2).

6. A device according to one of Claims 3 to 5, characterised in that to adjust the height of the strip (5) a drive (eccentric member 10, motor 11) is provided which engages its underside.

7. A device according to Claim 6, characterised in that the drive (motor 11) can be actuated as a function of the travelling speed.

8. A device according to Claim 7, characterised in that when a first travelling speed V₁ is reached, the drive (motor 11) extends the strip (5) and lowers the strip (5) when a second higher travelling speed V₂ is reached.

9. A device according to one of Claims 3 to 8, characterised in that the adjustment of the height of the strip (5) takes place as a function of the position of the cover (4).

10. A device according to one of the preceding Claims, characterised in that the strip (5) serves as a carrier for a roof aerial (17).

11. A device according to one of Claims 6 to 10, characterised in that the drive (motor 11) for adjusting the height of the strip (5) is used at the same time to extend and retract the roof aerial (17).

## Revendications

1. Dispositif pour influencer le flux d'air dans la région de l'ouverture (3) d'un véhicule équipé d'un toit ouvrant comportant un couvercle (4) libérant ou fermant à volonté l'ouverture (3) pratiquée dans le toit fixe (2),
caractérisé en ce que
le dispositif est constitué par une barrette parallèle au bord ouvert (3A) de l'ouverture (3), située au milieu et en avant de ce bord et dont la longueur (L) est de 80 à 50 % de la longueur (B) de l'ouverture de toit (3) dont elle est séparée par une distance (A) de 30 à 150 mm environ.

2. Dispositif selon la revendication 1,
caractérisé en ce que
la barrette (5) a sa face avant (6) inclinée vers l'arrière.

3. Dispositif selon une des revendications précédentes,
caractérisé en ce que
le bord supérieur (7) de la barrette (5) a sa hauteur (H), réglable par rapport au toit fixe (2).

4. Dispositif selon la revendication 3,
caractérisé en ce que
la barrette (5) peut être escamotée par enfoncement dans un réceptacle (9) prévu dans le toit fixe (2).

5. Dispositif selon une des revendications 3 ou 4,
caractérisé en ce que
le bord avant de la barrette (5) est monté pivotant le long du toit fixe (2).

6. Dispositif selon une des revendications 3 à 5,
caractérisé en ce que
pour régler la hauteur de la barrette (5), il est prévu un entraînement (excentrique 10 et moteur 11) agissant sur la face inférieure de la barrette.

7. Dispositif selon la revendications 6,
caractérisé en ce que
l'entraînement (moteur 11) peut être actionné en fonction de la vitesse du véhicule.

8. Dispositif selon la revendication 7,
caractérisé en ce que
l'entraînement (moteur 11) déploie la barrette lorsqu'une première vitesse V1 du véhicule est atteinte, et abaisse cette barrette lorsqu'une seconde vitesse V2, plus élevée, est atteinte.

9. Dispositif selon une des revendications 3 à 8,
caractérisé en ce que
le réglage de la hauteur de la barrette (5) a lieu en fonction de la position du couvercle (4).

10. Dispositif selon une des revendications précédentes,
caractérisé en ce que
la barrette (5) sert de support à une antenne de toit (17).

11. Dispositif selon une des revendications 6 à 10,
caractérisé en ce que
l'entraînement (moteur 11) assurant le réglage de la hauteur de la barrette (5) est utilisé en même temps pour faire sortir ou rentrer l'antenne (17).
